# EUROPEAN PATENT APPLICATION

(11) **EP 3 202 643 A1**
(43) Date of publication of application: **09.08.2017**
(21) Application number: 17154223.6
(22) Date of filing: 01.02.2017
(51) Int. Cl.: B62D 5/04

(54) **STEERING SYSTEM AND METHOD FOR ARRANGEMENT OF IDLER PULLEY**

(30) Priority: 05.02.2016 JP 2016020997
(71) Applicant: JTEKT CORPORATION, Osaka-shi, Osaka 542-8502 (JP)
(72) Inventor: TOMIKAWA, Takashi, Osaka-shi, Osaka, 542-8502 (JP); TOYODA, Hiroyuki, Toyota-shi, Aichi, 471-8571 (JP)
(74) Representative: Winter, Brandl, Fürniss, Hübner, Röss, Kaiser, Polte - Partnerschaft mbB

(57) **Abstract**

A steering system includes a motor 20, a rack shaft 12, and a nut 31 that is screw-thread on the rack shaft 12 via a plurality of balls. The steering system further includes a reduction mechanism having a driving pulley 41, a driven pulley 42, a belt 43, and an idler pulley 54 that applies tension to the belt 43. The steering system further includes a housing 16 that houses the motor 20, the rack shaft 12, the nut 31, and the reduction mechanism. Compressive rigidity in an axial direction is set to vary between a near-end area and a far-end area of the housing 16. The idler pulley 54 is provided so as to contact a portion of the belt 43 which is loosened when end contact occurs at an axial end of the housing 16 where the compressive rigidity is set to a larger value.

## Description

### BACKGROUND OF THE INVENTION

### 1. Field of the Invention

The invention relates to a steering system and a method for arrangement of an idler pulley.

### 2. Description of the Related Art

A steering system is available which assists a user's steering operation by transmitting a rotational motion of a motor to a ball screw mechanism via a belt type reduction mechanism to convert the rotational motion of the motor into a linear motion of a rack shaft. The belt type reduction mechanism has a pair of pulleys and a toothed belt passed between the pulleys. Besides the pair of pulleys, the belt type reduction mechanism has a pulley that applies tension to the toothed belt so as to prevent jumping of teeth of the toothed belt meshed with teeth of the pair of pulleys. See, for example, Japanese Patent Application Publication No. 2007-112245 (JP 2007-112245 A).

JP 2007-112245 A discloses a belt type reduction mechanism having, in addition to a driving pulley provided integrally with a rotating shaft of a motor, a driven pulley externally inserted over a rack shaft, and a toothed belt passed between the driving pulley and the driven pulley, one idler pulley that presses the toothed belt between the pulleys.

In the steering system, when the rack shaft moves to a stroke end, what is called "end contact" occurs in which a corresponding one of end members attached to opposite ends of the rack shaft collides against a corresponding end of a housing in which the rack shaft is housed. For example, when end contact occurs in the steering system described in JP 2007-112245 A, the driven pulley suddenly stops rotation, whereas an impact torque based on motor inertia and the inertia of the driving pulley to urge the driving pulley to rotate is applied to the driving pulley. The impact torque causes loosening of a portion of the toothed belt located between the driving pulley and the driven pulley and on a side that corresponds to a rotating direction of the driving pulley. The loosening causes teeth of the belt to rise from corresponding teeth of the driving pulley. If the teeth rise significantly, tooth jump may occur. The idler pulley in the steering system is provided on a side of the toothed belt that is raised when the end contact occurs at an end of the housing located far from a nut of the ball screw mechanism, following movement of the rack shaft to the stroke end.

If the steering system is provided with the idler pulley, the rise of the toothed belt resulting from the end contact can be expected to be reduced by the idler pulley. This is effective, in the configuration of the steering system, when the end contact occurs at the end of housing located far from the ball screw mechanism. In the steering system, the rise of the toothed belt resulting from the end contact may occur not only at the time of the end contact at the end of the housing located far from the ball screw mechanism but also at the time of the end contact at the end of the housing located close to the ball screw mechanism. Thus, in order to exert this effect on the end contact at the end of the housing located close to the ball screw mechanism, an additional idler pulley may be provided on the side of the toothed belt that is raised at the time of the end contact. However, addition of the idler pulley increases the number of components, possibly leading to, for example, an increased size of the belt type reduction mechanism and an increased assembly man-hour.

### SUMMARY OF THE INVENTION

An object of the invention is to provide a steering system and a method for arrangement of an idler pulley which allow suppression of an increase in the size of a belt type reduction mechanism and in assembly man-hour resulting from an increased number of components even when a tooth jump measure is taken.

A steering system in an aspect of the invention includes a motor, a steered shaft that reciprocates in an axial direction and that includes end members integrally provided at opposite ends of the steered shaft such that the end members define stroke ends in the axial direction, a nut screw-threaded on the steered shaft via a plurality of balls, a belt type reduction mechanism having a driving pulley into which a rotating shaft of a motor is inserted and which is fixed to an outer peripheral surface of the rotating shaft, a driven pulley into which a nut is inserted and which is fixed to an outer peripheral surface of the nut, a toothed belt passed between the driving pulley and the driven pulley, and an idler pulley that contacts a portion of the toothed belt located between the driving pulley and the driven pulley to apply tension to the toothed belt, and a housing that houses the motor, the steered shaft, the nut, and the belt type reduction mechanism and that extends along an axial direction of the steered shaft. Compressive rigidity in the axial direction is set to vary over an area in the housing from each of axially opposite ends to a housing portion of the nut, and the idler pulley is provided so as to contact one of two portions of the toothed belt located between the driving pulley and the driven pulley, which portion is loosened when the end member collides against a corresponding one of the axial ends of the housing where the compressive rigidity is set to a larger value.

If the idler pulley is not provided between the driving pulley and the driven pulley, when end contact occurs at the axially opposite ends of the housing, an impact torque is generated at each of the opposite ends to loosen the toothed belt. When the end contact occurs at the axially opposite ends of the housing, a portion of the toothed belt that is on the side toward which the belt is fed from the driving pulley is deflected away both from the driving pulley and from the driven pulley to loosen the belt.

The inventors have found that, if the axially opposite ends of the housing have different compressive rigidities with respect to the axial direction as in the configuration described above, the impact torque exerted on the driving pulley varies in magnitude between the end contact at one of the axial ends and the end contact at the other axial end. In accordance with this knowledge, a higher impact torque is exerted on the driving pulley when the end contact occurs at one of the axial ends of the housing that has a higher compressive rigidity than when the end contact occurs at the other axial end of the housing that has a lower compressive rigidity. That is, if the idler pulley is not provided between the driving pulley and the driven pulley, the toothed belt is more significantly loosened due to a higher impact torque when the end contact occurs at the end with a higher compressive rigidity than when the end contact occurs at the end with a lower compressive rigidity.

The above-described arrangement of the idler pulley involves consideration for the degree of loosening of the toothed belt with respect to the driving pulley and the driven pulley which may result from the end contact at the axially opposite ends of the housing. The likelihood of jumping of teeth of the toothed belt meshed with teeth of the driving pulley and the driven pulley increases consistently with the degree of loosening of the toothed belt. The tooth jump resulting from the loosened toothed belt can be suppressed using the idler pulley. In this case, a single idler pulley is used to suppress loosening of the toothed belt on a side where the toothed belt is significantly loosened. Accordingly, when the end contact occurs at the axially opposite ends of the housing, the possibility of tooth jump can be effectively reduced. Therefore, a tooth jump measure can be taken without the need to provide an additional idler pulley. The present configuration allows suppression of an increase in the size of a belt type reduction mechanism and in assembly man-hour resulting from an increased number of components even when the tooth jump measure is taken.

Specifically, one of the axial ends of the housing may be set to have a shorter distance to the housing portion of the nut than the other axial end of the housing so as to have a higher compressive rigidity than the other axial end of the housing.

In the steering system in which the housing portion of the nut is located closer to one of a right and a left ends, the above-described arrangement of the idler pulley enables the single idler pulley to effectively reduce the possibility of tooth jump when the end contact occurs at the axially opposite ends of the housing.

Specifically, to more suitably exert the above-described effects, the idler pulley shall be provided such that at least a part of an outer periphery of the idler pulley extends beyond a common tangent to outer peripheries of the driving pulley and the driven pulley so that the part is close to the driving pulley and the driven pulley.

In an arrangement of the idler pulley in the above-described steering system, an arrangement of the idler pulley when a groove is formed in the steered shaft in a right-hand thread direction and an arrangement of the idler pulley when a groove is formed in the steered shaft in a left-hand thread direction desirably have an inversion relation with respect to a segment connecting a center of the driving pulley and a center of the driven pulley.

For the groove, one of the right-hand thread direction and the left-hand thread direction may be optionally selected. However, the above-described arrangement of the idler pulley involves only inversion with respect to the segment connecting the center of the driving pulley to the center of the driven pulley regardless of which thread direction is selected, and thus can be easily applied to any thread direction. Therefore, the arrangement of the idler pulley is applicable to any steering system with a belt type reduction mechanism regardless of specifications and is thus advantageous in view of general purpose properties.

The steering system in the above-described aspect allows suppression of an increase in the size of the belt type reduction mechanism and in assembly man-hour resulting from an increased number of components even when a tooth jump measure is taken.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a diagram depicting a general configuration of an electric power steering system;
FIG. 2 is a sectional view depicting a general configuration of an assist mechanism in the electric power steering system;
FIG. 3 is a sectional view taken along line III-III in FIG. 2;
FIG. 4 is a diagram schematically depicting a manner in which a belt is loosened at the time of end contact;
FIG. 5A is a diagram schematically depicting the state of the belt at the time of the end contact;
FIG. 5B is a diagram schematically depicting the state of the belt at the time of the end contact;
FIG. 6 is a diagram depicting a general configuration of an electric power steering system with a left-hand thread configuration;
FIG. 7 is a sectional view taken along line VII-VII in FIG. 6; and
FIG. 8 is a diagram schematically depicting a manner in which the belt is loosened at the time of the end contact in the electric power steering system with a left-hand thread configuration.

### DETAILED DESCRIPTION OF EMBODIMENTS

An embodiment of a steering system and a method for arrangement of an idler pulley will be described below. The steering system in the present embodiment is an electric power steering system (EPS) that assists a driver's steering operation by transmitting a rotational motion of a motor to a ball screw mechanism via a belt type reduction mechanism to convert the rotational motion of the motor into a linear motion of a rack shaft.

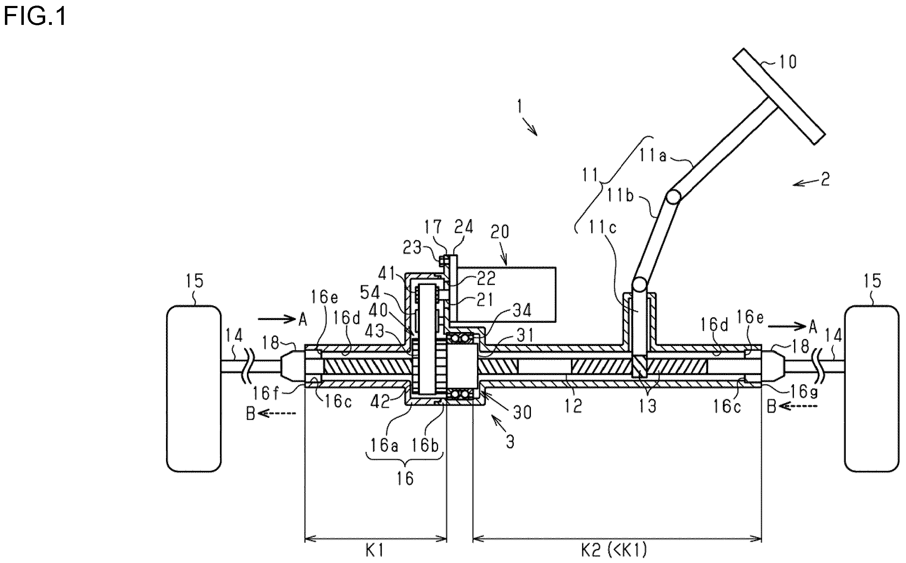

As depicted in FIG. 1, an EPS 1 includes a steering mechanism 2 that performs a steering operation on steered wheels 15 based on the driver's operation of a steering wheel 10, and an assist mechanism 3 that assists a user's steering operation.

The steering mechanism 2 includes a steering wheel 10 and a steering shaft 11 that rotates integrally with the steering wheel 10. The steering shaft 11 has a column shaft 11a coupled to the steering wheel 10, an intermediate shaft 11b coupled to a lower end of the column shaft 11 a, and a pinion shaft 11c coupled to a lower end of the intermediate shaft 11b. A lower end of the pinion shaft 11c is coupled via a rack-and-pinion mechanism 13 to a rack shaft 12 serving as a steered shaft. Therefore, a rotational motion of the steering shaft 11 is converted into a reciprocating linear motion of the rack shaft 12 in an axial direction (a lateral direction in FIG. 1) via the rack-and-pinion mechanism 13 including the pinion shaft 11c and the rack shaft 12. The reciprocating linear motion is transmitted to the right and left steered wheels 15 via respective tie rods 14 coupled to the opposite ends of the rack shaft 12 to vary the steered angle of the steered wheels 15. The EPS 1 in the present embodiment is intended for a right-hand steering wheel. Thus, when a back side of the sheet of FIG. 1 is assumed to be a front side of a vehicle, the steering wheel 10 and the steering shaft 11 are arranged on a right side with respect to the front side of the vehicle, and the pinion shaft 11c is arranged on a rear side of the vehicle with respect to the rack shaft 12.

The assist mechanism 3 is provided around the rack shaft 12. The assist mechanism 3 has a motor 20 that is a source of an assist force, a ball screw mechanism 30 integrally attached to a periphery of the rack shaft 12, and a belt type reduction mechanism (hereinafter referred to as a reduction mechanism) 40 that transmits a turning force of a rotating shaft 21 of a motor 20 to the ball screw mechanism 30. The assist mechanism 3 converts the turning force of the rotating shaft 21 of the motor 20 via the reduction mechanism 40 and the ball screw mechanism 30 into a force that allows the rack shaft 12 to make reciprocating linear motion in the axial direction. The axial force applied to the rack shaft 12 serves as an assist force to assist the user's steering operation.

The ball screw mechanism 30, the reduction mechanism 40, the pinion shaft 11c, and the rack shaft 12 are covered by a housing 16 extending along an axial direction of the rack shaft 12. The housing 16 is configured by coupling a first housing 16a and a second housing 16b together; the housing 16 is divided into the first housing 16a and the second housing 16b in the axial direction of the rack shaft 12 near the reduction mechanism 40. The first housing 16a protrudes in a direction crossing a direction (upward in FIG. 1) in which the rack shaft 12 extends. A through-hole 22 is formed in an outer wall (in FIG. 1, a right side wall) of the second housing 16b. The rotating shaft 21 of the motor 20 extends into the first housing 16a through the through-hole 22. The motor 20 is fixed to the second housing 16b by coupling a flange portion 17 provided on the second housing 16b to a flange portion 24 provided on the motor 20, using a bolt 23. The rotating shaft 21 is parallel to the rack shaft 12.

Inner ball joints (IBJs) 18 are provided at opposite ends of the rack shaft 12 so as to serve as end members to which the tie rods 14 are pivotally coupled. The IBJs 18 are enabled to enter and exit diameter expanded portions 16c provided at the axially opposite ends of the housing 16. A bore diameter of each of the diameter expanded portions 16c is set larger than a bore diameter of a corresponding one of rack housing portions 16d of the housing 16 that houses the rack shaft 12. A step portion 16e having a wall surface facing the IBJ 18 is provided in an area where the diameter expanded portion 16c and the rack housing portion 16d are joined together. On the other hand, an outside diameter of the IBJ 18 is set smaller than the bore diameter of the diameter expanded portion 16c of the housing 16 and larger than the bore diameter of the rack housing portion 16d. Movement of the rack shaft 12 in the axial direction is limited by end contact resulting from the IBJs 18 butting against the respective step portions 16e. That is, for the movement of the rack shaft 12 in the axial direction, stroke ends (movement limits) are defined by the IBJs 18.

Now, the assist mechanism 3 will be described in detail.

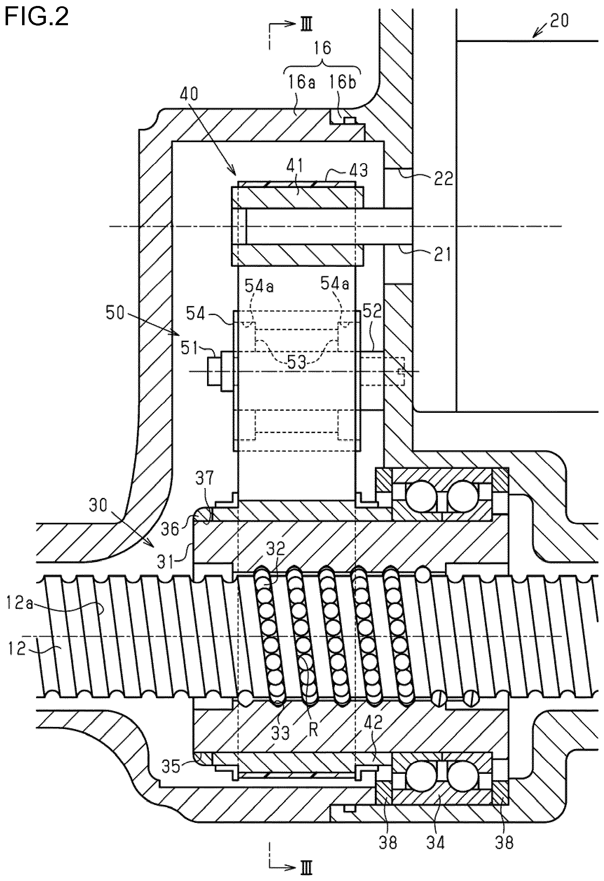

As depicted in FIG. 2, the ball screw mechanism 30 includes a cylindrical nut 31 that is screw-threaded on the rack shaft 12 via a plurality of balls 32. The nut 31 is rotatably supported with respect to an inner peripheral surface of the housing 16 via a cylindrical bearing 34. A spiral groove 12a is formed in an outer peripheral surface of the rack shaft 12. A spiral groove 33 corresponding to the groove 12a in the rack shaft 12 is formed in an inner peripheral surface of the nut 31. The groove 12a in the rack shaft 12 and the groove 33 in the nut 31 are processed so as to extend in what is called a right-hand thread direction such that rightward (clockwise) rotation of the nut 31 allows the rack shaft 12 to advance toward an observer when the rack shaft 12 is viewed in the axial direction. A spiral space enclosed by the groove 33 in the nut 31 and the groove 12a in the rack shaft 12 functions as a rolling path R through which the balls 32 roll. Although not depicted in the drawings, the nut 31 is provided with a circulation path that is open at two positions to the rolling path R, so that the openings communicate with each other. Therefore, the balls 32 can endlessly circulate through the rolling path R via the circulation path in the nut 31. A lubricant such as grease is applied to the rolling path R to reduce frictional resistance and the like generated when the balls 32 roll. The bearing 34 has a sufficient load capability so as to be continuously used even when the bearing 34 is subjected to such a force (rated load) that the bearing 34 is unlikely to fail when the force is repeatedly exerted on the bearing 34 a specified number of times.

As depicted in FIG. 1, the ball screw mechanism 30, that is, the nut 31, is provided closer to one of axially opposite ends of the housing 16. The rack-and-pinion mechanism 13 is provided closer to one of the axially opposite ends of the housing 16 that is opposite to the end located closer to the ball screw mechanism 30. Specifically, when a housing end 16f is defined as the end at which the end contact occurs as a result of movement of the rack shaft 12 in an A direction (in FIG. 1, a right direction depicted by a continuous line) and a housing end 16g is defined as an end opposite to the housing end 16f, the housing end 16f is set to have a shorter distance to the ball screw mechanism 30 than the housing end 16g. The housing end 16g is the end at which the end contact occurs as a result of movement of the rack shaft 12 in a B direction (in FIG. 1, a left direction depicted by a dashed line).

With reference to the bearing 34 that supports the nut 31 in the ball screw mechanism 30, the area between the housing ends 16f, 16g may be divided into a near-end area having a short distance from the end of the housing and a far-end area having a long distance from the end of the housing. Specifically, the near-end area is an area from the housing end 16f to an end face of the bearing 34 that is closer to the housing end 16f. The far-end area is an area from the housing end 16g to an end face of the bearing 34 that is closer to the housing end 16g.

In this case, when compressive rigidities K1, K2 are defined as rigidities (axial rigidities) at which the near-end area and the far-end area, respectively, are compressively deformed with respect to the axial direction, then in the housing 16, the compressive rigidities K1, K2 are different from each other, and the compressive rigidity K1 is set higher than the compressive rigidity K2. That is, the near-end area is configured to be less likely to be compressively deformed with respect to the axial direction than the far-end area.

At the time of the end contact at each of the housing ends 16f, 16g, in the housing 16 that houses the assist mechanism 3, an impact load is generated in the axial direction, in which the rack shaft 12 moves, as a result of collision of the IBJ 18 against the housing end 16f, 16g at high speed. The impact load acts to compressively deform the near-end area in the axial direction at the time of the end contact on the housing end 16f side. The impact load also acts to compressively deform the far-end area in the axial direction at the time of the end contact on the housing end 16g side.

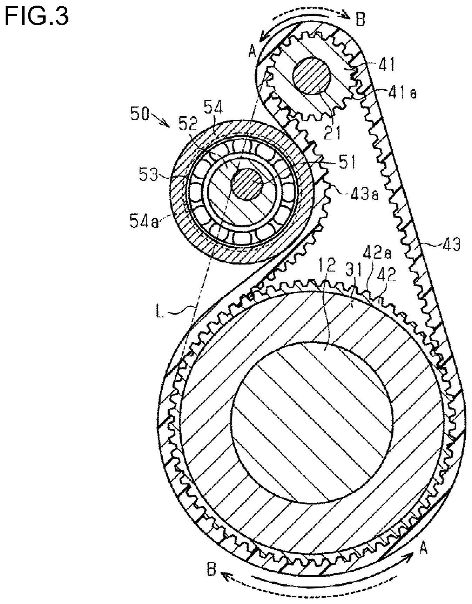

The description continues with reference to FIG. 2 again. The reduction mechanism 40 includes a driving pulley 41 integrally attached to the rotating shaft 21 of the motor 20, a driven pulley 42 integrally attached to an outer periphery of the nut 31, and a belt 43 passed between the driving pulley 41 and the driven pulley 42. In an internal space in the first housing 16a, the rotating shaft 21 of the motor 20, the driving pulley 41 attached to the rotating shaft 21, and the belt 43 are arranged. The belt 43 is a rubber toothed belt including a core wire. The driving pulley 41 and the driven pulley 42 are toothed pulleys. As depicted in FIG. 3, teeth 43a are provided on an inner peripheral surface (a surface that contacts each of the driving pulley 41 and the driven pulley 42) of the belt 43. Teeth 41a, 42a that mesh with the teeth 43a are provided on outer peripheral surfaces of the driving pulley 41 and the driven pulley 42, respectively.

On an outer peripheral surface of the nut 31, a lock nut 36, the driven pulley 42, and the bearing 34 are provided in this order from a side opposite to the rack-and-pinion mechanism 13. On an inner peripheral surface of the lock nut 36, a groove 37 is formed which is screw-threaded on a groove 35. An inner ring of the bearing 34 is fixed on the outer peripheral surface of the nut 31 by being sandwiched between the driven pulley 42 and a flange portion at an end of the nut 31 closer to the rack-and-pinion mechanism 13. An outer ring of the bearing 34 is fixed by being sandwiched between the first housing 16a and the second housing 16b via fixing members 38 provided on axially opposite sides of the outer ring.

Therefore, rotation of the rotating shaft 21 of the motor 20 allows the driving pulley 41 to rotate integrally with the rotating shaft 21. Rotation of the driving pulley 41 is transmitted to the driven pulley 42 via the belt 43. Consequently, the driven pulley 42 rotates integrally with the nut 31. The nut 31 rotates relatively to the rack shaft 12, and thus, the balls 32 interposed between the nut 31 and the rack shaft 12 circulate endlessly through the rolling path R under loads imposed both by the nut 31 and by the rack shaft 12. When the balls 32 roll through the rolling path R, a torque applied to the nut 31 is converted into a force applied to the rack shaft 12 in the axial direction. Thus, the rack shaft 12 moves in the axial direction with respect to the nut 31. The axial force applied to the rack shaft 12 serves as an assist force to assist the driver's steering operation. Inside the second housing 16b, a belt tension adjustment mechanism 50 is provided which applies tension to the belt 43.

Now, the belt tension adjustment mechanism 50 will be described in detail.

As depicted in FIG. 2 and FIG. 3, the belt tension adjustment mechanism 50 has an adjustment shaft 51 fitted to the second housing 16b and an eccentric shaft 52 attached to an outer periphery of the adjustment shaft 51. The belt tension adjustment mechanism 50 has two bearings 53 provided on an outer periphery of the eccentric shaft 52 at a distance from each other in the axial direction and an idler pulley 54 rotatably attached to an outer periphery of the eccentric shaft 52 via the bearings 53.

The eccentric shaft 52 is a cylindrical member having a center of rotation displaced from (located eccentrically with respect to) a central axis. That is, the eccentric shaft 52 has a thick wall portion that has a large length from the center of rotation in a radial direction and a thin wall portion that has a small length from the center of rotation in the radial direction. The eccentric shaft 52 is fixed to the second housing 16b by the adjustment shaft 51 with the thick wall portion and the thin wall portion adjustably oriented in predetermined directions.

On an inner peripheral surface of each of axially opposite ends of the idler pulley 54, a fitting portion 54a is provided which is fitted on a corresponding one of the bearings 53. A bore diameter of the fitting portion 54a is set larger than a bore diameter of a portion of the idler pulley 54 excluding the fitting portion 54a. An axial length of the fitting portion 54a is similar to an axial length of the bearing 53.

The idler pulley 54 is provided on an outer periphery of the eccentric shaft 52 with outer rings of the two bearings 53 fitted on the respective fitting portions 54a. Inner rings of the two bearings 53 are fixed to an outer peripheral surface of the eccentric shaft 52 so as to be press-fitted on the outer peripheral surface. Consequently, the idler pulley 54 rotates relatively to the eccentric shaft 52 via the two bearings 53.

As depicted in FIG. 3, the idler pulley 54 is provided between the driving pulley 41 and the driven pulley 42. The idler pulley 54 is provided such that a part of an outer periphery of the idler pulley 54 extends beyond a common tangent L to outer peripheries of the driving pulley 41 and the driven pulley 42 so that the part is close to the driving pulley 41 and the driven pulley 42. Consequently, the driving pulley 41 and the driven pulley 42 mesh with the belt 43 within given ranges in circumferential directions of the driving pulley 41 and the driven pulley 42. The idler pulley 54 is pressed against a portion of the belt 43 located between the driving pulley 41 and the driven pulley 42 to increase the ranges of meshing engagement between the belt 43 and the driving pulley 41 and between the belt 43 and driven pulley 42.

The idler pulley 54 applies, to the belt 43, tension corresponding to directions in which the thick wall portion and the thin wall portion of the eccentric shaft 52 face. For example, the belt 43 is subjected to a higher tension when the thick wall portion of the eccentric shaft 52 extends beyond the common tangent L so as to be closest to the driving pulley 41 and the driven pulley 42 than when the thin wall portion of the eccentric shaft 52 extends beyond the common tangent L so as to be closest to the driving pulley 41 and the driven pulley 42.

The idler pulley 54 is arranged on a side toward which the belt 43 is fed from the driving pulley 41 when the driving pulley 41 and the driven pulley 42 rotate in an A direction (in FIG. 3, counterclockwise). No components including the idler pulley 54 are arranged on a side toward which the belt 43 is fed from the driving pulley 41 when the driving pulley 41 and the driven pulley 42 rotate in a B direction (in FIG. 3, clockwise).

As depicted in FIG. 1 and FIG. 3, while the rack shaft 12 is moving in the A direction (in FIG. 1, rightward), the driving pulley 41 and the driven pulley 42 are rotating in the A direction (in FIG. 3, counterclockwise). In this case, when the rack shaft 12 reaches the stroke end, the end contact occurs in the near-end area. While the rack shaft 12 is moving in the B direction (in FIG. 1, leftward), the driving pulley 41 and the driven pulley 42 are rotating in the B direction (in FIG. 3, clockwise). In this case, when the rack shaft 12 reaches the stroke end, the end contact occurs in the far-end area.

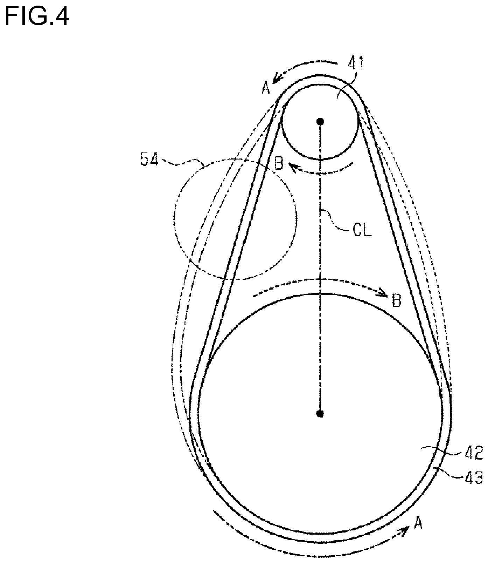

The above-described present embodiment produce effects described below.
(1) For example, if the idler pulley 54 is not provided between the driving pulley 41 and the driven pulley 42 as depicted in FIG. 4, then at the time of the end contact in each of the near-end area and in the far-end area, an impact torque is exerted by inertia of the motor 20 and the driving pulley 41, leading to loosening of the belt 43. In other words, at the time of the end contact in the near-end area, if the driving pulley 41 is rotating in the A direction, the belt 43 is loosened and deflected on the side toward which the belt 43 is fed from the driving pulley 41 (in FIG. 4, the left side), that is, on the side where the belt 43 extends away from a segment CL connecting the center of the driving pulley 41 to the center of the driven pulley 42 toward the driven pulley 42. At the time of the end contact in the far-end area, if the driving pulley 41 is rotating in the B direction, the belt 43 is loosened and deflected on the side toward which the belt 43 is fed from the driving pulley 41 (in FIG. 4, the right side), that is, on the side toward which the belt 43 extends away from the segment CL toward the driven pulley 42.

The inventors have found that, if the near-end area and the far-end area of the housing 16 have the different compressive rigidities K1, K2 as in the present embodiment, the impact torque exerted on the driving pulley 41 varies in magnitude between the end contact in the near-end area and the end contact in the far-end area even when the rack shaft 12 moves at the same speed before the end contact. In accordance with this knowledge, regarding the near-end area and the far-end area of the housing 16, a higher impact torque is exerted on the driving pulley 41 when the end contact occurs in the near-end area having the higher compressive rigidity than when the end contact occurs in the far-end area having the lower compressive rigidity. This is because, at the time of the end contact in the near-end area and in the far-end area, the housing 16 is compressively deformed, which decelerates the reduction mechanism 40 and the motor 20 such that a variation in the deceleration (acceleration) corresponds to a variation in the above-described compressive rigidity. The impact torque is determined by multiplying the deceleration (acceleration) by inertia moments of the motor 20 and the driving pulley 41.

If the idler pulley 54 is not provided between the driving pulley 41 and the driven pulley 42 as depicted in FIG. 4, the belt 43 is more significantly loosened on the side (in FIG. 4, the left side) toward which the belt 43 is fed from the driving pulley 41 rotating in the A direction when the end contact occurs in the near-end area than when the end contact occurs in the far-end area. That is, the degree of loosening and deflection of the belt 43 increases consistently with the impact torque, which is higher when the end contact occurs in the near-end area having the higher compressive rigidity than when the end contact occurs in the far-end area having the lower compressive rigidity.

In contrast, the arrangement of the idler pulley 54 in the present embodiment involves consideration for the degree of loosening of the belt 43 with respect to the driving pulley 41 and the driven pulley 42 which may result from the end contact in the near- and far-end areas of the housing 16.

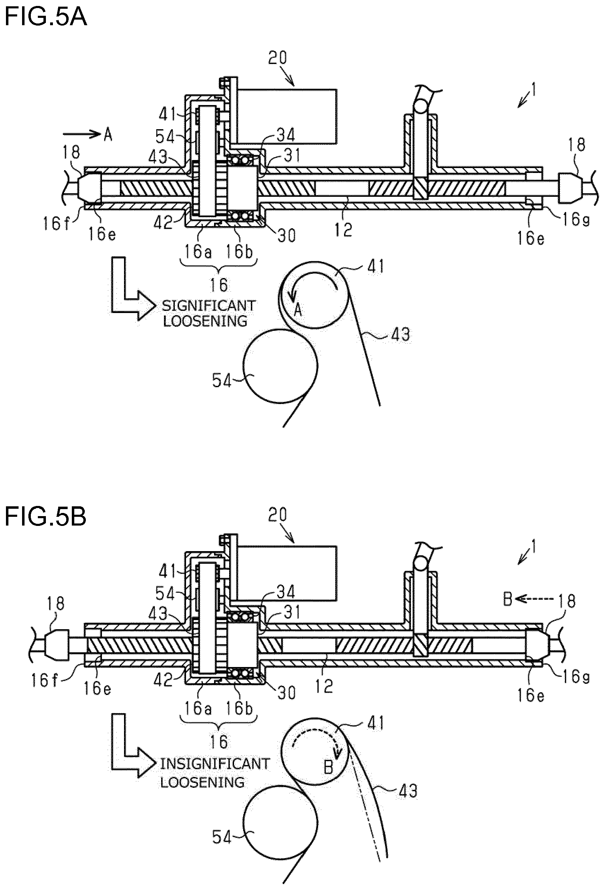

Specifically, when the rack shaft 12 moves in the A direction and the end contact occurs in the near-end area (housing end 16f), which has a higher compressive rigidity than the far-end area, as depicted in FIG. 5A, a higher impact torque is exerted than when the end contact occurs in the far-end area (high compressive rigidity = high impact torque). In this case, the degree of loosening resulting from rotation of the driving pulley 41 in the A direction is higher than the degree of loosening resulting from rotation of the driving pulley 41 in the B direction (significant loosening). The idler pulley 54 is provided on the side where the driving pulley 41 rotating in the A direction significantly loosens the belt 43 when the end contact occurs in the near-end area as described above.

When the rack shaft 12 moves in the B direction and the end contact occurs in the far-end area (housing end 16g), which has a lower compressive rigidity than the near-end area, as depicted in FIG. 5B, a lower impact torque is exerted than when the end contact occurs in the near-end area (low compressive rigidity = low impact torque). In this case, the degree of loosening resulting from rotation of the driving pulley 41 in the B direction is lower than the degree of loosening resulting from rotation of the driving pulley 41 in the A direction (insignificant loosening). The idler pulley 54 is not provided on the side where the driving pulley 41 rotating in the B direction insignificantly loosens the belt 43 when the end contact occurs in the far-end area as described above.

An increased degree of loosening of the belt 43 obviously leads to an increased likelihood of jumping of the teeth of the belt 43 meshed with the teeth of the driving pulley 41 and the driven pulley 42. The single idler pulley 54 allows suppression of significant loosening of the belt 43, which is likely to result in tooth jump. This configuration enables a reduction in the possibility of tooth jump both at the time of the end contact in the near-end area and at the time of the end contact in the far-end area of the EPS 1, compared to the case where the single idler pulley 54 is used to suppress loosening of the belt 43 on the side where the belt 43 is less significantly loosened. Therefore, an effective measure against tooth jump can be taken without the need to provide an additional idler pulley 54. The present configuration allows suppression of an increase in the size of the reduction mechanism 40 and in assembly man-hour resulting from an increase in the number of components due to the addition of the idler pulley 54.
(2) Now, the steering system described in JP 2007-112245 A will be discussed. Like the present embodiment, the steering system in JP 2007-112245 A is configured such that the distance from the nut to one of the axially opposite ends of the housing is different from the distance from the nut to the other axial end of the housing and such that the compressive rigidity in the axial direction is higher at the end located at a shorter distance to the nut. The idler pulley in JP 2007-112245 A is provided on the side where the toothed belt is loosened with respect to the driving pulley and the driven pulley when the end contact occurs at one of the axially opposite ends of the housing that has a lower compressive rigidity (the end located at a longer distance to the nut). That is, the arrangement of the idler pulley in JP 2007-112245 A involves no consideration for the degree of loosening of the toothed belt with respect to the driving pulley and the driven pulley which may result from the end contact at the axially opposite ends of the housing. Therefore, JP 2007-112245 A needs to use two idler pulleys so as to reduce the possibility of tooth jump at the time of the end contact at the axially opposite ends of the housing.

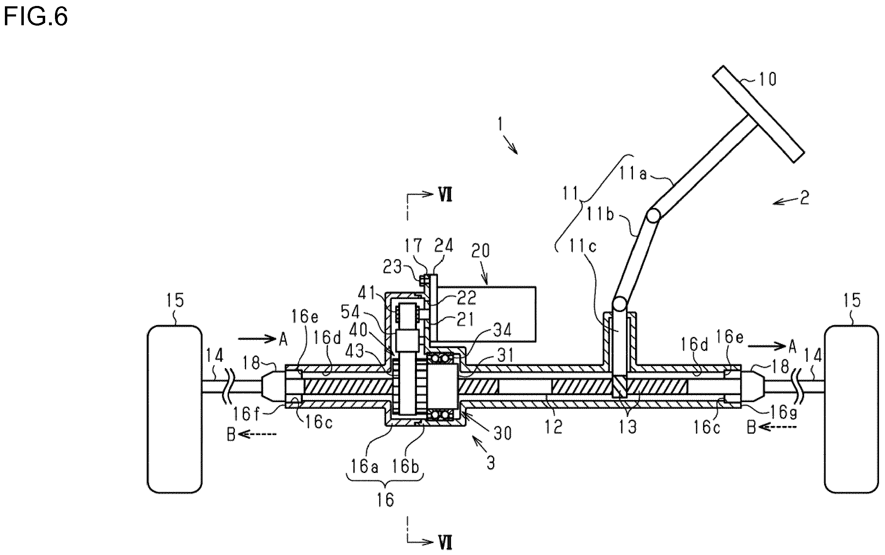

In contrast, the arrangement of the idler pulley 54 in the present embodiment enables the single idler pulley to reduce the possibility of tooth jump at the time of the end contact at the axially opposite ends of the housing even in the steering system described in JP 2007-112245 A.
(3) As depicted in FIG. 6, in the EPS 1 in the present embodiment, the groove 12a in the rack shaft 12 and the groove 33 in the nut 31 may be processed to extend in what is called the left-hand thread direction such that leftward (counterclockwise) rotation of the nut 31 allows the rack shaft 12 to advance toward the observer when the rack shaft 12 is viewed in the axial direction. In the following description, a right-hand thread configuration refers to the groove 12a in the rack shaft 12 and the groove 33 in the nut 31 forming right-hand threads, and a left-hand thread configuration refers to the groove 12a in the rack shaft 12 and the groove 33 in the nut 31 forming left-hand threads.

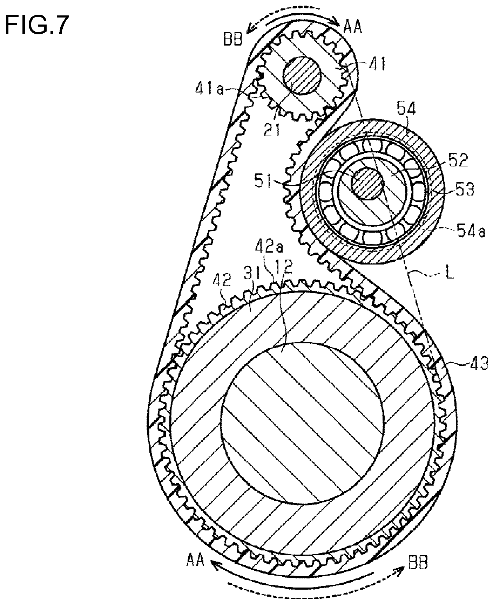

For the left-hand thread configuration, the idler pulley 54 is arranged on the side toward which the belt 43 is fed from the driving pulley 41 when the driving pulley 41 and the driven pulley 42 rotate in an AA direction (in FIG. 7, clockwise) as depicted in FIG. 7. No components including the idler pulley 54 are arranged on the side toward which the belt 43 is fed from the driving pulley 41 when the driving pulley 41 and the driven pulley 42 rotate in a BB direction (in FIG. 7, counterclockwise).

As depicted in FIG. 6 and FIG. 7, in the left-hand thread configuration, while the rack shaft 12 is moving in the A direction (in FIG. 6, rightward), the driving pulley 41 and the driven pulley 42 are rotating in the AA direction (in FIG. 7, clockwise). In this case, when the rack shaft 12 reaches the stroke end, the end contact occurs in the near-end area. In the left-hand thread configuration, while the rack shaft 12 is moving in the B direction (in FIG. 6, leftward), the driving pulley 41 and the driven pulley 42 are rotating in the BB direction (in FIG. 7, counterclockwise). In this case, when the rack shaft 12 reaches the stroke end, the end contact occurs in the far-end area. FIG. 7 is a sectional view taken along line VII-VII in FIG. 6 and viewed in the same direction as the direction in which the sectional view in FIG. 3 is viewed.

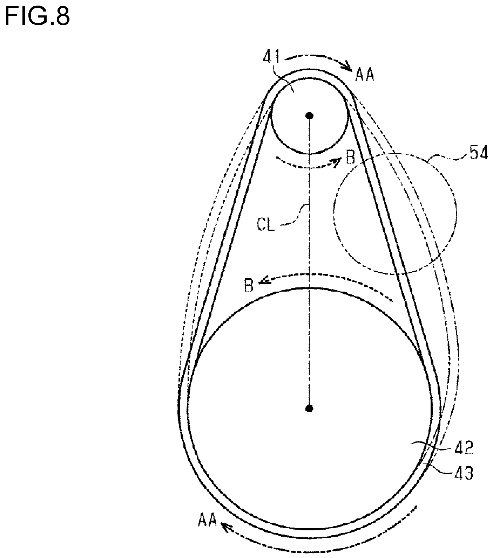

For example, in the left-hand thread configuration, if the idler pulley 54 is not provided between the driving pulley 41 and the driven pulley 42, an impact torque is exerted when the end contact occurs in each of the near-end area and in the far-end area, leading to loosening of the belt 43 as depicted in FIG. 8. In other words, in the left-hand thread configuration, at the time of the end contact in the near-end area, if the driving pulley 41 is rotating in the AA direction, the belt 43 is loosened and deflected on the side toward which the belt 43 is fed from the driving pulley 41 (in FIG. 8, the right side), that is, on the side where the belt 43 extends away from a segment CL connecting the center of the driving pulley 41 to the center of the driven pulley 42 toward the driven pulley 42. On the other hand, in the left-hand thread configuration, at the time of the end contact in the far-end area, if the driving pulley 41 is rotating in the BB direction, the belt 43 is loosened and deflected on the side toward which the belt 43 is fed from the driving pulley 41 (in FIG. 8, the left side), that is, on the side where the belt 43 extends away from the segment CL toward the driven pulley 42.

As depicted in FIG. 8, if the idler pulley 54 is not provided between the driving pulley 41 and the driven pulley 42, the belt 43 is more significantly loosened on the side toward which the belt 43 is fed from the driving pulley 41 rotating in the AA direction when the end contact occurs in the near-end area than when the end contact occurs in the far-end area.

In the left-hand thread configuration, the idler pulley 54 is provided on the side where the belt 43 is significantly loosened by the driving pulley 41 rotating in the AA direction when the end contact occurs in the near-end area. On the other hand, in the left-hand thread configuration, the idler pulley 54 is not provided on the side where the belt 43 is insignificantly loosened by the driving pulley 41 rotating in the BB direction when the end contact occurs in the far-end area.

As described above, for the arrangement of the idler pulley 54 in the EPS 1, the left-hand thread configuration and the right-hand thread configuration have an inversion relation (in the present embodiment, reflectional symmetry relation) with respect to the segment CL connecting the center of the driving pulley 41 and the center of the driven pulley 42.

For the groove 12a formed in the rack shaft 12 and the groove 33 in the nut 31, one of the right-hand thread direction and the left-hand thread direction maybe optionally selected. However, regardless of which thread direction is selected, the arrangement of the idler pulley 54 in the present embodiment can be easily applied simply by inverting the arrangement with respect to the segment CL (lateral inversion is used for the case of the configurations in FIG. 3 and FIG. 7). Therefore, the arrangement of the idler pulley is applicable to any EPS 1 with the belt type reduction mechanism 40 regardless of specifications and is thus advantageous in view of general purpose properties.

The above-described embodiment may be implemented in forms described below.

The EPS 1 may be intended for a left-hand steering wheel. Thus, when the back side of the drawing plane of FIG. 1 is assumed to be the front side of the vehicle, the steering wheel 10 and the steering shaft 11 may be arranged on the left side with respect to the front side of the vehicle. The configuration of the EPS 1 in this case is obtained by symmetrically displacing the configuration in FIG. 1 in the lateral direction in FIG. 1. In the EPS 1, the pinion shaft 11c may be arranged forward of the rack shaft 12 in the vehicle regardless of whether the vehicle has the right-hand steering wheel or the left-hand steering wheel. In this case, for the groove 12a formed in the rack shaft 12 and the groove 33 in the nut 31, either of the right-hand thread direction and the left-hand thread direction maybe selected. In either case, identifying the side where the belt 43 is loosened with respect to the driving pulley 41 and the driven pulley 42 when the end contact occurs at the end with a higher compressive rigidity (in the near-end area) and providing the idler pulley 54 on the identified side produce effects similar to the effects of the above-described embodiment can be exerted.

Depending on the magnitude of the tension applied to the belt 43, the idler pulley 54 may be provided such that the entire outer periphery of the idler pulley 54 extends beyond the common tangent L to the outer peripheries of the driving pulley 41 and the driven pulley 42 so that the entire outer periphery is close to the driving pulley 41 and the driven pulley 42. In the above-described embodiment, the idler pulley 54 is pressed against the belt 43 so as to increase the range of the meshing engagement between the driving pulley 41 and the belt 43. However, the idler pulley 54 may be pressed against the belt 43 slightly enough to keep the range of the meshing engagement between the driving pulley 41 and the belt 43 substantially unchanged.

The compressive rigidity of the housing 16 need not be set according to the position where the ball screw mechanism 30, that is, the nut 31 is provided. For example, for the near-end area and the far-end area, the thickness of each housing 16a, 16b may be adjusted to set the compressive rigidity K1 of the near-end area lower than the compressive rigidity K2 of the far-end area. In this case, if the rack shaft 12 moves in the B direction and the end contact occurs in the far-end area, which has a higher compressive rigidity than the near-end area, the idler pulley 54 may be provided on the side where the belt 43 is significantly loosened by the driving pulley 41 rotating in the B direction. In the present variation, the ball screw mechanism 30, that is, the nut 31, may be provided substantially midway between the axially opposite ends of the housing 16.

On the outer peripheral surface of the nut 31, the lock nut 36, the bearing 34, and the driven pulley 42 may be provided in this order from the side opposite to the rack-and-pinion mechanism 13. In this case, the inner ring of the bearing 34 is fixed by being sandwiched between the lock nut 36 and the driven pulley 42 on the outer peripheral surface of the nut 31. This configuration can also produce effects similar to the effects of the above-described embodiment.

The above-described embodiment is implemented in the EPS 1 but is not limited to this. For example, the embodiment may be applied to a steer-by-wire (SBW) steering system. Furthermore, the above-described embodiment may be implemented not only in the SBW system but also in a rear-wheel steering system or a four-wheel steering system (4WS). When the embodiment is implemented in the SBW system, instead of the rack shaft 12, which has a rack, a shaft without a rack may be adopted as a steered shaft. In this case, for example, the ball screw mechanism 30 is used to apply a steering operation force to the shaft serving as a steered shaft.

## Claims

1. A steering system comprising:
a motor;
a steered shaft that reciprocates in an axial direction and that includes end members integrally provided at opposite ends of the steered shaft such that the end members define stroke ends in the axial direction;
a nut screw-threaded on the steered shaft via a plurality of balls;
a belt type reduction mechanism having a driving pulley into which a rotating shaft of the motor is inserted and which is fixed to an outer peripheral surface of the rotating shaft, a driven pulley into which the nut is inserted and which is fixed to an outer peripheral surface of the nut, a toothed belt passed between the driving pulley and the driven pulley, and an idler pulley that contacts a portion of the toothed belt located between the driving pulley and the driven pulley to apply tension to the toothed belt; and
a housing that houses the motor, the steered shaft, the nut, and the belt type reduction mechanism and that extends along an axial direction of the steered shaft; wherein
compressive rigidity in the axial direction is set to vary over an area in the housing from each of axially opposite ends to a housing portion of the nut, and
the idler pulley is provided so as to contact one of two portions of the toothed belt located between the driving pulley and the driven pulley, which portion is loosened when the end member collides against a corresponding one of the axial ends of the housing where the compressive rigidity is set to a larger value.

2. The steering system according to claim 1, wherein
one of the axial ends of the housing is set to have a shorter distance to the housing portion of the nut than the other axial end of the housing so as to have a higher compressive rigidity than the other axial end of the housing.

3. The steering system according to claim 1 or claim 2, wherein
the idler pulley is provided such that at least a part of an outer periphery of the idler pulley extends beyond a common tangent to outer peripheries of the driving pulley and the driven pulley so as to be close to the driving pulley and the driven pulley.

4. The steering system according to any one of claims 1 to 3, wherein
an arrangement of the idler pulley when a groove is formed in the steered shaft in a right-hand thread direction and an arrangement of the idler pulley when a groove is formed in the steered shaft in a left-hand thread direction have an inversion relation with respect to a segment connecting a center of the driving pulley and a center of the driven pulley.

5. A method for arrangement of an idler pulley in a steering system including:
a motor;
a steered shaft that reciprocates in an axial direction and that includes end members integrally provided at opposite ends of the steered shaft such that the end members define stroke ends in the axial direction;
a nut screw-threaded on the steered shaft via a plurality of balls;
a belt type reduction mechanism having a driving pulley into which a rotating shaft of the motor is inserted and which is fixed to an outer peripheral surface of the rotating shaft, a driven pulley into which a nut is inserted and which is fixed to an outer peripheral surface of the nut, a toothed belt passed between the driving pulley and the driven pulley, and the idler pulley that contacts a portion of the toothed belt located between the driving pulley and the driven pulley to apply tension to the toothed belt; and
a housing that houses the motor, the steered shaft, the nut, and the belt type reduction mechanism and that extends along an axial direction of the steered shaft, the method comprising:
setting compressive rigidity in the axial direction such that the compressive rigidity varies over an area in the housing from each of axially opposite ends to a housing portion of the nut; and
providing the idler pulley such that the idler pulley contacts one of two portions of the toothed belt located between the driving pulley and the driven pulley, which portion is loosened when the end member collides against a corresponding one of the axial ends of the housing where the compressive rigidity is set to a larger value.
